**Europäisches Patentamt**

**European Patent Office**

**Office européen des brevets**

(11) Veröffentlichungsnummer: **0 248 237**
**B1**

(12) **EUROPÄISCHE PATENTSCHRIFT**

(45) Veröffentlichungstag der Patentschrift:
20.09.89

(51) Int. Cl.⁴: **B32B 21/06**, H01B 1/22,
H01B 1/24
// D21H1/28, D21H3/82,
H05F3/00

(21) Anmeldenummer: 87106792.2

(22) Anmeldetag: 11.05.87

(54) Leitfähige Verbundplatte sowie Verfahren zu deren Herstellung.

(30) Priorität: 04.06.86 DE 3618834

(43) Veröffentlichungstag der Anmeldung:
09.12.87 Patentblatt 87/50

(45) Bekanntmachung des Hinweises auf die Patenterteilung:
20.09.89 Patentblatt 89/38

(84) Benannte Vertragsstaaten:
AT BE CH DE ES FR GB GR IT LI LU NL SE

(56) Entgegenhaltungen:
DE-A- 3 338 268
DE-A- 3 446 632
DE-B- 1 233 248
DE-C- 2 834 185
US-A- 4 472 474

(73) Patentinhaber: Thermopal Dekorplatten Gmbh & Co.
KG, Wurzacher Strasse 32, 7970 Leutkirch(DE)

(72) Erfinder: Huthwelker, Dirk, Dr., Schlossbergweg 13,
D-7970 Leutkirch-Unterzell(DE)
Erfinder: Räth, Eugen, Holbeinstrasse 7,
D-7970 Leutkirch(DE)
Erfinder: Konrad, Eugen, Kepplerweg 6,
D-7988 Wangen(DE)

(74) Vertreter: Patentanwälte Dipl.-Ing. E. Eisele Dr.-Ing. H.
Otten, Seestrasse 42, D-7980 Ravensburg(DE)

## Beschreibung

Die Erfindung betrifft eine leitfähige Verbundplatte mit einer rußhaltigen Spanplatte als Träger und einer dekorativen Deckschicht aus melaminbeharztem Papier, welche elektrisch leitfähige Füllstoffe aufweist.

Derartige Verbundplatten werden vorzugsweise überall dort eingesetzt, wo mit elektrostatisch gefährdeten Bauelementen und Baugruppen gearbeitet wird. Die zunehmende Verdichtung der elektrischen Bauteile auf den Schaltanordnungen führt dazu, daß diese außergewöhnlich empfindlich gegenüber elektrostatischen Entladungen werden. Die Verbundplatten sollen einerseits leitfähig genug sein, um die Ladungen beispielsweise von elektrostatisch aufgeladenen Personen unschädlich abzuleiten und örtliche Spannungsspitzen zu vermeiden. Andererseits soll die Leitfähigkeit aber so weit begrenzt sein, daß Personen, die mit unter Spannung stehenden Komponenten arbeiten, nicht durch Berührungsspannungen gefährdet werden. Es wird deshalb ein nach dem deutschen Normblatt Din 51 953 gemessener Ableitwiderstand zwischen 10⁵ Ohm und 10⁷ Ohm angestrebt.

Es ist bekannt, diese Ableitfähigkeit bei Verbundplatten allein über den Oberflächenwiderstand, zum Beispiel durch eine leitfähige Lackierung, zu erreichen. Dieser Ableitwiderstand ist jedoch nachteiliger Weise von der Temperatur und der Luftfeuchte abhängig.

Bekannt sind ferner Verbundplatten mit einer leitfähigen Spanplatte als Träger, auf den eine leitfähige thermoplastische Kunststoffmatte aufgelegt ist oder zwischen einer nicht leitfähigen Spanplatte und der Kunststoffmatte ein Drahtnetz eingefügt ist. Die relativ weiche Matte kann jedoch leicht beschädigt werden.

Bei einer leitfähigen Verbundplatte der einleitend bezeichneten Art, wie sie aus dem DE-GM 83 05 544 bekannt ist, sind als Füllstoffe in der Deckschicht insbesondere metallische Oxidfarben zu einem Anteil von etwa 20 % bis 40 % enthalten. Bei dieser Verbundplatte wird ein Ableitwiderstand von 10⁸ Ohm bis 6 × 10⁸ Ohm angestrebt. Jedoch ist bei einer solchen Verbundplatte ein Postforming nicht möglich.

Der Erfindung liegt die Aufgabe zugrunde, eine leitfähige Verbundplatte vorzuschlagen, die nicht nur einen konstanten, genau definierten Ableitwiderstand hat, sondern sich auch zur Herstellung von gerundeten Querschnittsprofilen im Postforming-Verfahren eignet.

Diese Aufgabe wird erfindungsgemäß dadurch gelöst, daß die Deckschicht fein verteiltes Metallpulver, vorzugsweise Aluminium, Kupfer oder Messing, enthält und die äußere Schicht eines Hochdruckschichtstoffes bildet, dessen Kernschicht aus mit Phenolharz imprägnierten Papieren besteht und infolge von Ruß- und/oder Metalleinschlüssen leitfähig ist, und daß der Hochdruckschichtstoff mittels eines durch Rußeinschlüsse leitfähig gemachten Leims mit der Spanplatte verleimt ist. Es gibt zwei verschiedene Verfahren, um die erforderliche Leitfähigkeit des Phenolpapierkerns herbeizuführen. Entweder wird dem Papier bei der Papierherstellung schon Ruß beigegeben oder der Ruß wird dem Phenolharz zugesetzt und zwar vor oder während des Imprägnierens des Papiers. Beide Verfahren können aber auch kombiniert werden, worunter zu verstehen ist, daß das zuvor schon rußhaltige Papier mit einem rußhaltigen Phenolharz imprägniert wird.

Es ist zwar an sich bekannt, Spanplatten ein- oder beidseitig mit einem Hochdruckschichtstoff aus einem phenolbeharzten Kern mit melaminbeharzter Deckschicht (Dekorschicht) zu verleimen. Überraschenderweise bietet jedoch gerade diese Technik bei leitfähigen Verbundplatten besondere Vorteile, sofern, wie erwähnt, auch die Phenolpapierschicht und der Leim leitfähig sind. Der elektrische Kontakt zwischen der Deckschicht und der leitfähigen Spanplatte wird durch die leitfähige Phenolpapierschicht und die Verleimung verbessert. Deshalb kann der Aluminiumanteil des melaminbeharzten Papiers verhältnismäßig klein sein, vorzugsweise unter 50 %. Dadurch sind praktisch alle gängigen Oberflächendekore möglich. Die Aluminiumeinschlüsse sind dabei von außen nicht sichtbar. Das Papier kann bedruckt werden. Ferner kann die Dicke des Hochdruckschichtstoffes ohne weiteres so gewählt werden, nämlich vorzugsweise zwischen 0,5 und 1,2 mm, daß im Postforming-Verfahren auch gerundete Profilgestaltungen hergestellt werden können. Die mechanischen Eigenschaften, insbesondere die Stoß- und Kratzfestigkeit der Plattenoberfläche sind hervorragend. Die elektrostatische Aufladung wird von der gesamten Oberfläche direkt in die Spanplatte abgeleitet. Der Ableitwiderstand läßt sich durch die richtige Kombination Metallpulveranteil/Melaminharzauftrag gezielt einstellen. Die von Temperaturen bis 60° und von der Luftfeuchtigkeit praktisch unbeinflußten Ableitwiderstände liegen in allen Bereichen der Verbundplatte zwischen 10⁵ Ohm und 10⁷ Ohm.

Ein Ausführungsbeispiel der Erfindung wird nachfolgend anhand einer schematischen Schnittzeichnung erläutert.

Eine durch Rußeinschlüsse leitfähig gemachte Spanplatte (1) bildet den konstruktiv tragenden Teil der Verbundplatte. Das Randprofil ist gerundet. Auf der Oberseite ist die Spanplatte (1) mittels eines durch Rußeinschlüsse leitfähig gemachten Klebers (2) mit einem Hochdruckschichtstoff (3) verleimt. Letzterer besteht aus einer Kernschicht (4) und einer Deckschicht (5). Die Kernschicht besteht aus mehreren, im Beispiel drei Blättern (6) eines phenolbeharzten Papieres. Das Papier und/oder das zum Imprägnieren verwendete Phenolharz enthält ebenfalls Ruß und hat deshalb wie auch der Leim (2) einen Ableitwiderstand von etwa 10⁶ Ohm. Die Deckschicht (5) ist eine Melaminharz-Dekorbeschichtung mit eingeschlossenen Aluminiumpartikeln, vorzugsweise im Einschicht- oder Mehrschichtaufbau im Rückkühlverfahren hergestellt. Die Dicke des Hochdruckschichtstoffes (3) beträgt 0,7 mm. An der Unterseite der Spanplatte (1) kann eine geeignete Gegenzugbeschichtung angebracht sein.

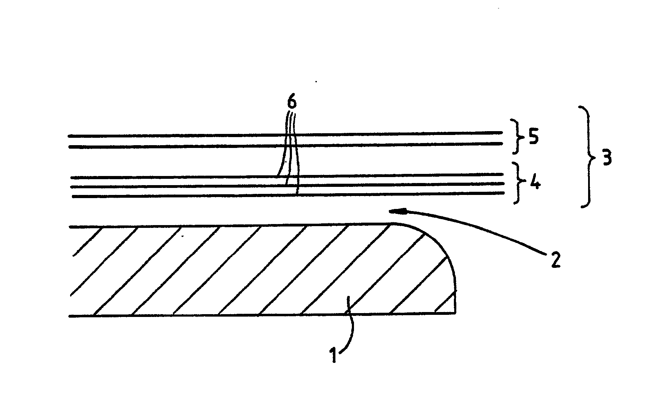

## Patentansprüche

I. Leitfähige Verbundplatte mit einer rußhaltigen Spanplatte als Träger und einer dekorativen Deckschicht aus melaminbeharztem Papier, welche elektrisch leitfähige Füllstoffe aufweist, dadurch gekennzeichnet, daß die Deckschicht (5) fein verteiltes Metallpulver enthält und die äußere Schicht eines Hochdruckschichtstoffes (3) bildet, dessen Kernschicht (4) aus mit Phenolharz imprägnierten Papieren (6) besteht und infolge von Ruß- und/oder Metalleinschlüssen leitfähig ist, und daß der Hochdruckschichtstoff (3) mittels eines durch Rußeinschlüsse leitfähig gemachten Leims (2) mit der Spanplatte (I) verleimt ist.

2. Verfahren zur Herstellung einer leitfähigen Verbundplatte nach Anspruch I, dadurch gekennzeichnet, daß dem Papier (6) der Kernschicht (4) Ruß und/oder Metallpulver bei der Papierherstellung beigegeben wird.

3. Verfahren zur Herstellung einer leitfähigen Verbundplatte nach Anspruch I, dadurch gekennzeichnet, daß dem Phenolharz vor oder bei dem Imprägnieren des Papiers (6) der Kernschicht (4) Ruß zugesetzt wird.

## Claims

1. A conductive laminated board with a carbon black-containing chip board as substrate and a decorative surface layer of melamine resin-treated paper, having electrically conductive fillers, characterised in that the surface layer (5) contains finely divided metal powder and the outer layer forms a high pressure laminate material (3), whose core layer (4) consists of papers (6) impregnated with phenolic resin and is conductive owing to carbon black and/or metal inclusions, and in that the high pressure laminate material (3) is glued to the chipboard (1) by means of a glue (2) which has been rendered conductive by carbon black inclusions.

2. A process for producing a conductive laminated board according to Claim 1, characterised in that carbon black and/or metal powder is added to the paper (6) of the core layer (4) during production of the paper.

3. A process for producing a conductive laminated board according to Claim 1, characterised in that carbon black is added to the phenolic resin before or during impregnation of the paper (6) of the core layer (4).

## Revendications

1. Plaque composite conductrice, comportant un panneau d'agglomérés contenant du noir de carbone, en tant que support, et une couche de recouvrement décorative en papier enduit de mélamine, laquelle présente des matières de remplissage électriquement conductrices, caractérisée en ce que la couche de recouvrement (5) contient de la poudre métallique très divisée et forme la couche externe d'un stratifié à haute pression (3), dont la couche interne (4) est constituée de feuilles de papier (6) imprégnées de résine phénolique et, grâce à des inclusions de métal et/ou de noir de carbone, est conductrice, et en ce que le stratifié (3) est collé au panneau d'agglomérés (1) au moyen d'une colle (2) rendue conductrice par des inclusions de noir de carbone.

2. Procédé pour réaliser une plaque composite conductrice selon la revendication 1, caractérisé en ce que du noir de carbone et/ou de la poudre métallique sont ajoutés au papier (6) de la couche interne (4) lors de la fabrication du papier.

3. Procédé pour réaliser une plaque composite conductrice selon la revendication 1, caractérisé en ce que du noir de carbone est ajouté à la résine phénolique avant ou lors de l'imprégnation du papier (6) de la couche interne (4).